# EUROPEAN PATENT APPLICATION

(11) **EP 3 001 703 A1**
(43) Date of publication of application: **30.03.2016**
(21) Application number: 14306510.0
(22) Date of filing: 29.09.2014
(51) Int. Cl.: H04W 4/00

(54) **Coverage enhancement for multicast in a cellular network**

(71) Applicant: ALCATEL LUCENT, 92100 Boulogne-Billancourt (FR)
(72) Inventor: Worral, Chandrika, SWINDON, Wiltshire WI SN5 7DJ (GB); Wong, Shin Horng, SWINDON, Wiltshire WI SN5 7DJ (GB)
(74) Representative: Huber, Meik

(57) **Abstract**

The present invention relates to coverage enhancement in a cellular network, e.g. for coverage enhancement in a Multimedia Broadcast Multicast Service application in an LTE cellular network. At least two identifiers, e.g. Temporary Mobile Group Identifiers, are assigned to the same service and the service is transmitted repeatedly over MBMS.

## Description

### FIELD OF THE INVENTION

The present invention relates to coverage enhancement in a cellular network, e.g. for coverage enhancement in Multimedia Broadcast Multicast Service in an LTE cellular network.

### BACKGROUND OF THE INVENTION

This section introduces aspects that may be helpful in facilitating a better understanding of the invention. Accordingly, the statements of this section are to be read in this light and are not to be understood as admission about what is in the prior art.

In enhanced 4G wireless systems and especially in future 5G wireless systems, a large number of devices, e.g. user equipment devices (UE), will be present in the coverage area of a base station, e.g. an eNodeB. For scenarios known by the paradigm "Internet of Things", Machine Type Communication (MTC) devices are UE that are used for specific applications. An example of such an MTC device is a smart meter. In many cases, these devices are not mobile, but are installed at fixed locations. Some of these devices are located at places where the received signal quality is low due to the high penetration losses. In an example scenario, the devices are located at the basement of a building. 3GPP currently works on a specification including coverage enhancement for low cost Machine Type Communication devices. According to the state of the art, repetition of physical channels, i.e. resending the same signal on a different radio resource, is considered as a solution to enhance the coverage area for Machine Type Communication User Equipments. On a device to device basis, it is decided if the signal has to be repeated and send to this device on the same physical channel. Devices in low signal quality areas can request retransmission and have multiple chances to receive the signal. The number of repetitions needed for successful coverage enhancement is high, e.g. 100 repetitions, which significantly reduces the spectral efficiency.

Multimedia Broadcast Multicast Service (MBMS) is specified in 3GPP for communication to a group of User Equipments simultaneously in a radio resource efficient manner. Waveform combining properties of Multimedia Broadcast Multicast Service result in high spectral efficiency. For example, software updates, meter reporting triggers or critical information on an emergency situation, e.g. gas leak resulting in shutting down all the meters temporarily, is delivered to a group of Machine Type Communication devices by a Multimedia Broadcast Multicast Service transmission.

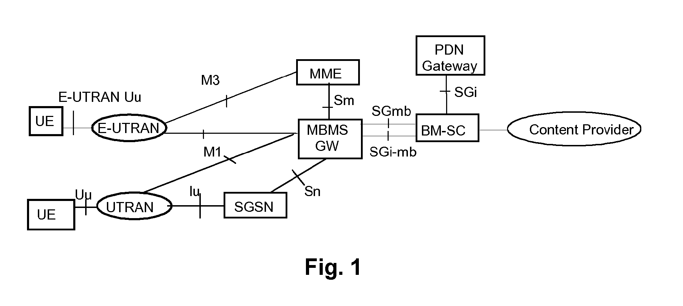

Multimedia Broadcast Multicast Service (MBMS) architecture in LTE is shown in Fig. 1. A Content Provider is a user of the 3GPP network and provides the content for the MBMS transmission. In an MBMS architecture in LTE, a Broadcast Multicast Service Center (BM-SC) controls many aspects of the MBMS system, such as handling the user plane media delivery to the Radio Access Network (RAN), control, security and charging aspects of the MBMS transmission. The BM-SC allocates a Temporary Mobile Group Identifier (TMGI) to a particular service which is indented to be delivered by MBMS. The UE is informed of the service and the allocated TMGI in the User Service Description (USD), which is delivered to the UE by the application/service layer.

The service is identified in the transport network by the TMGI. The BM-SC informs the E-UTRAN of the Quality of Service (QoS) of the required transport bearer in the Session Start Request Message. The Session Start Request Message is used to establish the MBMS Radio Bearer (MRB) for the delivery of the service by the E-UTRAN. The MRB is identified by a Logical Channel Identity (LCID). Each MBMS service identified by a TMGI is mapped to an MRB.

The user plane traffic of a MBMS service is delivered to the MBMS Gateway (MBMS GW) from the BM-SC. The MBMS GW delivers the traffic to the eNodeBs (eNB) over the M1 interface.

### SUMMARY OF THE INVENTION

It is an object of the invention to provide advanced methods and devices for coverage enhancement in cellular networks. Coverage enhancement is understood as at least temporarily or locally improving the data transmission quality between a transmitter and a receiver. This includes also the possibility to extend the coverage area of a base station to areas where only poor signal quality is available and due to the poor signal quality data reception with methods according to the prior art is hardly possible and fails. It is an object of the invention to improve reception of the signal there and to make decoding of the information transmitted in the signal is possible.

According to one embodiment, a method for coverage enhancement in a cellular network, e.g. an LTE network is proposed. The method is performed in a transmitter, e.g. a Base Station or an eNodeB or a device forwarding a received service to at least one other device. The method assigns a first identifier to a service. A service is e.g. a MBMS service which should be provided over the network in MBMS or eMBMS mode. Further, the method assigns at least one second identifier to the same service. The same service means that the same information is transmitted. The method transmits the first identifier and the at least one second identifier over the network to the User Equipments. In one embodiment, the User Equipments to which the first identifier and the at least one second identifier are transmitted to are Machine Type Communication User Equipments. The method transmits the service on a first radio bearer corresponding to the first identifier. Additionally, the method transmits the service on at least one second radio bearer corresponding to the at least one second identifier. According to one embodiment, the radio bearers are MBMS Radio Bearers. According to one embodiment, the first radio bearer and the second radio bearer are different radio bearers. This has the advantage that MBMS transmission is combined with channel repetition. MBMS transmission significantly improves spectral efficiency. But it is disadvantageous in case some User Equipments suffer from poor signal quality. This effect is especially disadvantageous in case of Machine Type Devices, which are not mobile, because there is no chance that they might move to an area with better signal quality and receive the signal in better quality there. On the other hand, channel repetition reduces at first sight spectral efficiency because data is sent multiple times. But channel repetition is advantageous because it is a solution for coverage enhancement. Combining MBMS with channel repetition, an overall improvement in terms of spectral efficiency is achieved and coverage is extended. In order to benefit from the coverage extension realized by channel repetition as described above, the receiving User Equipments need to be adapted to the method. The above described method has the further advantage that legacy User Equipments, which are not adapted to the above mentioned method, still can receive the first transmission and receive a signal the same way as in a normal MBMS transmission. Thus, the method according to the invention has the advantage that it can serve Coverage Enhanced User Equipments, but at the same time, User Equipments not suitable for coverage enhancement enjoy the same service level as they would do in a system according to the prior art.

According to one embodiment, the first identifier and the at least one second identifier are provided by the Broadcast Multicast Service Center (BM-SC) to the Multi-cell/multicast Coordination Entity (MCE). According to one embodiment, a core network node or an application server present in the network is equipped to provide the first identifier and the at least one second identifier to the Multi-cell/multicast Coordination Entity (MCE). In one embodiment, the core network node or the application server provide the first identifier and the at least one second identifier to the User Equipment via application layer signaling or via the Broadcast Multicast Service Center.

According to one embodiment, a Session Start Request Message which is transmitted includes the first identifier and the at least one second identifier.

According to one embodiment, the Multi-cell/multicast Coordination Entity uses the first identifier for scheduling and configuration of the first transmission on the first radio bearer and uses the at least one second identifier for at least a second transmission on the at least one second radio bearer. According to one embodiment, transmitting the first identifier and transmitting the at least one second identifier is performed with the User Service Description (USD) and the at least one second identifier is included in the User Service Description by an extension of the XML structure.

According to one embodiment, the Physical Multicast Channel Information List (PMCH-InfoList) Information Element (IE) is used to configure the MBMS Radio Bearer.

According to one embodiment, the first radio bearer and the at least one second radio bearer are mapped to different Multicast Broadcast Single Frequency Network (MBSFN) areas or are mapped to the same Multicast Broadcast Single Frequency Network area but on different Physical Multicast Channels.

According to one embodiment, the method is performed in a Multimedia Broadcast Multicast Service (MBMS) network and the first identifier is a primary Temporary Mobile Group Identifier (TMGI) and the at least one second identifier are secondary Temporary Mobile Group Identifiers.

According to one embodiment, a method for coverage enhancement in a cellular network, e.g. an LTE network is proposed. The method is performed in a receiver device, e.g. a User Equipment device in an LTE network, e.g. a Machine Type Communication device. A first identifier assigned to a service is received by the device. A service is e.g. a MBMS service which should be provided over the network in MBMS or eMBMS mode. Further at least one second identifier assigned to the same service is received by the device. The same service means that the same information is transmitted. The User Equipment receives a first transmission on a first radio bearer corresponding to the first identifier. If the user equipment is in an area of low signal quality, the transmission may be corrupted or incomplete. Some data may be recoverable, other data may not be recoverable. Further, the User Equipment receives at least one second transmission on at least one second radio bearer corresponding to the at least one second identifier. According to one embodiment, the radio bearers are MBMS Radio Bearers. According to one embodiment, the first radio bearer and the second radio bearer are different radio bearers. This has the advantage that MBMS transmission methods are merged with channel repetition methods. MBMS transmission significantly improves spectral efficiency.

According to one embodiment, the data of the received first transmission and the data of the at least one second transmission are combined for providing the received service. If the data of the first transmission is complete and not corrupted, and if this can be determined, the data of the second transmission does not have to be combined, because the received service can be recovered completely from the first transmission. This saves computational power and hence battery power of the receiving devices at a location where good signal quality is available.

According to one embodiment, a Session Start Request Message including the first identifier and the second identifier is received.

According to one embodiment, receiving the first identifier and receiving the at least one second identifier is performed by receiving the User Service Description and the at least one second identifier is included in the User Service Description by an extension of the XML structure.

According to one embodiment, the method is performed in a Multimedia Broadcast Multicast Service network and the first identifier is a primary Temporary Mobile Group Identifier and the at least one second identifier are secondary Temporary Mobile Group Identifiers.

According to one embodiment, a Base Station in a cellular network is proposed. The Base Station performs the method as described above.

According to one embodiment, a User Equipment in a cellular network is proposed. The User Equipment performs the method as described above.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: shows a Multimedia Broadcast Multicast Service architecture
- Fig. 2: depicts a method for coverage enhancement according to the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

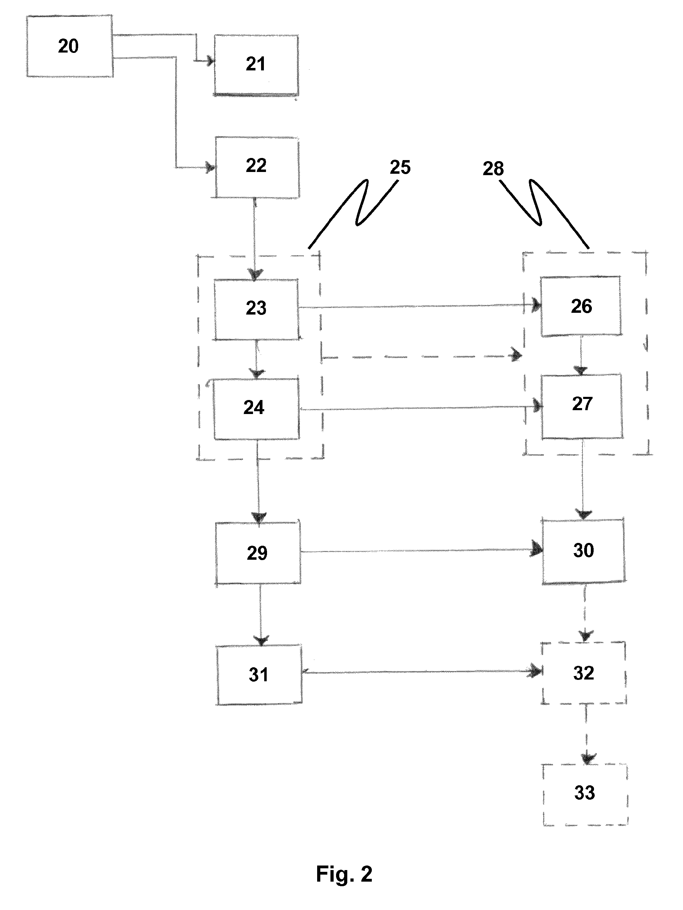

Fig. 2 illustrates a method according to the invention. In step 20, a first identifier and at least one second identifier are generated by the Broadcast Multicast Service Center (BM-SC). According to one embodiment, a core network node or an application server present in the network is equipped to generate the first identifier and the at least one second identifier. In an LTE network, the first identifier is a first Temporary Mobile Group Identifier and the at least one second identifier is at least one second Temporary Mobile Group Identifier. In general, the Temporary Mobile Group Identifiers are used as an identity of the transmitted services trough the transport network. The service assigned to one Temporary Mobile Group Identifier is transmitted once over the M1 and the Uu interfaces of the LTE network. The first identifier is assigned to a service in step 21. The service is an MBMS service which is provided by broadcast by the network. The second identifier is assigned to the same service in step 22. The same service within this context means that the same information is broadcast. Thus, exactly the same information is conveyed by the first Temporary Mobile Group Identifier and by the at least one second Temporary Mobile Group Identifier. On a content level, the services are the same also with regard to their coding, thus the same unmodulated bits are used to describe the information. This does not mean that the same radio resources are used. Thus, the same service is not to be understood as being identical regarding the physical signals used for transmitting the service. The first identifier and the at least one second identifier are provided to the Multi-cell/multicast Coordination Entity (MCE). In one embodiment, the Broadcast Multicast Service Center provides the first identifier and the at least one second identifier. In one embodiment, the core network node or the application server provide the first identifier and the at least one second identifier. By assigning multiple Temporary Mobile Group Identifiers to the same service, repetition of transmission of the same service is realized over the LTE Uu interface as described below. In step 23, the first identifier is transmitted. In step 24, the at least one second identifier is transmitted. The transmissions steps are performed by a base station or eNodeB in the context of MBMS data transmission for setting up the broadcast of the information to be provided by the service. As indicated in Fig. 2 as step 25, in one embodiment, the first identifier and the at least one second identifier are broadcast together. Step 25 is dashed to indicate that this is one possibility beyond other existing possibilities to realize steps 23 and 24. In one embodiment, the Session Start Request Message as defined in LTE is used to transmit the first identifier and the at least one second identifier. In one embodiment, the User Service description is used for transmitting the first identifier and the at least one second identifier and the XML structure of the User Service Description is extended to include the at least one second identifier. In step 26, the User Equipment receives the first identifier. In step 27, the User Equipment receives the second identifier. As indicated in Fig. 2 as step 25, in one embodiment, the first identifier and the at least one second identifier are broadcast together. Then, in step 28, the User Equipment receives the first identifier and the at least one second identifier which are broadcast together. Step 28 is dashed to indicate that this is one possibility beyond other existing possibilities to realize steps 26 and 27. In one embodiment, the Session Start Request Message as defined in LTE is used to transmit the first identifier and the at least one second identifier. The User Equipment receives in step 28 the Session Start Request Message and derives the first identifier and the at least one second identifier there from. In one embodiment, the User Service Description is used for describing the first identifier and the at least one second identifier and the XML structure of the User Service Description is extended to include the at least one second identifier. In step 29, the service is transmitted as initial transmission by the eNodeB. The first identifier, e.g. the first Temporary Mobile Group Identifier, is used by the Multi-cell/multicast Coordination Entity for scheduling and configuration of the initial transmission of the service. The initial transmission is mapped to an MBMS Radio Bearer and is transmitted on the corresponding Multicast Broadcast Single Frequency Network. An MBMS Radio Bearer denotes the data bearer established between the base station, eNodeB or Radio Network Controller (RNC) and a User Equipment to transport MBMS data. In step 30, the User Equipment receives the initial transmission of the service on the MBMS Radio Bearer corresponding to the first identifier. The service may or may not be received completely depending on the signal quality at the location where the receiving User Equipment is situated. In step 31, the eNodeB transmits the same service as repetition transmission. The at least one second identifier, e.g. the at least one second Temporary Mobile Group Identifier, is used by the Multi-cell/multicast Coordination Entity for configuration of the at least one repetition transmission of the same service. The at least one repetition transmission is mapped to an MBMS Radio Bearer corresponding to the at least one second Temporary Mobile Group Identifier and is transmitted on the corresponding Multicast Broadcast Single Frequency Network. In one embodiment, Physical Multicast Channel Information List Information Element (PMCH-InfoList IE) is used to configure the MBMS Radio Bearer for a service identified by an identifier, e.g. a Temporary Mobile Group Identifier. Thus, PMCH-InfoList IE is used to configuring the multiple MBMS Radio Bearers for the same service. The Multi-cell/multicast Coordination Entity configures each repetition transmission of the service according to the configuration provided in PMCH-InfoList IE. Therefore, in one embodiment, the initial and the repetition transmission of the service are mapped to different Multicast Broadcast Single Frequency Network areas. In one embodiment, the initial and the repetitive transmission of the service are mapped on the same Multicast Broadcast Single Frequency Network area but on different PMCHs. In one embodiment, the initial and repetitive transmission of the service are mapped on the same Multicast Broadcast Single Frequency Network area and the same PMCH. In step 32, the User Equipments receive the repetition transmission of the service on the MBMS Radio Bearer corresponding to the second identifier. If a User Equipment is a device not supporting this method for coverage enhancement, e.g. a legacy device, the User Equipment receives the service as described above in step 31. It is not equipped to receive the repetition transmission and use the corresponding information and hence does not use and process the information provided with the repetition transmission. Such a User Equipment does not perform steps 32 and 33. If a User Equipment is supporting this method and is a coverage enhancement MBMS User Equipment, the User Equipment receives at least once the same service as the initial transmission in a at least one repetition transmission using the at least one second identifier. In step 33, the information received in step 30 and 32 in the initial transmission and the at least one repetition transmission are combined to provide the service. This way, in areas with poor signal quality, where a single broadcast of a service may provide only corrupted data which could maybe not processed without error, multiple repetitions of the data are received and combined in order to get the full information and provide the service.

In one embodiment, delivering of a service is performed over the M1 interface on the user plane. The Multimedia Broadcast Multicast Service is not explicitly aware of the fact that the at least one second identifier is assigned to the same service. The Multimedia Broadcast Multicast Service Gateway just delivers the user plane traffic to the eNodeB over the M1 interface and the service is identified using the first identifier. The eNodeB receives the MBMS Radio Bearer configuration for repetition transmission of the service from Multi-cell/multicast Coordination Entity. The eNodeB schedules and transmits the user plane traffic received over M1 interface according to the MBMS Radio Bearer configuration for repetition transmission over the Uu interface.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for coverage enhancement in a cellular network, comprising the steps of:
- assigning a first identifier to a service,
- assigning at least one second identifier to the same service,
- transmitting the first identifier,
- transmitting the at least one second identifier,
- transmitting the service on a first radio bearer corresponding to the first identifier, and
- transmitting the service on at least one second radio bearer corresponding to the at least one second identifier.

2. Method for coverage enhancement in a cellular network according to claim 1, wherein the first identifier and the at least one second identifier are provided by the Broadcast Multicast Service Center to the Multi-cell/multicast Coordination Entity.

3. Method for coverage enhancement in a cellular network according to claim 1 or 2, wherein a Session Start Request Message which is transmitted includes the first identifier and the at least one second identifier.

4. Method for coverage enhancement in a cellular network according to one of claims 1 to 3, wherein the Multi-cell/multicast Coordination Entity uses the first identifier for scheduling and configuration of the first transmission on the first radio bearer and the at least one second identifier for a second transmission on the second radio bearer.

5. Method for coverage enhancement in a cellular network according to one of claims 1 to 5, wherein transmitting the first identifier and transmitting the at least one second identifier is performed with the User Service Description and the at least one second identifier is included in the User Service Description by an extension of the XML structure.

6. Method for coverage enhancement in a cellular network according to one of claims 1 to 5, wherein the Physical Multicast Channel InfoList IE is used to configure the Multicast Boradcast Multimedia Service Radio Bearer.

7. Method for coverage enhancement in a cellular network according to one of claims 1 to 6, wherein the first radio bearer and the at least one second radio bearer are mapped to different Multicast Broadcast Single Frequency Network Areas or are mapped to the same Multicast Broadcast Single Frequency Network Areas but on different Physical Multicast Channels.

8. Method for coverage enhancement in a cellular network according to one of claims 1 to 10, wherein the method is performed in a Multimedia Broadcast Multicast Service network and the first identifier is a primary Temporary Mobile Group Identifier and the at least one second identifier are secondary Temporary Mobile Group Identifiers.

9. Method for coverage enhancement in a cellular network, comprising the steps of:
- receiving a first identifier assigned to a service,
- receiving at least one second identifier assigned to the same service,
- receiving a first transmission on a first radio bearer corresponding to the first identifier, and
- receiving at least one second transmission on at least one second radio bearer corresponding to the at least one second identifier.

10. Method for coverage enhancement in a cellular network according to claim 9, further comprising the step of:
- combining the data of the received first transmission and the data of the at least one second transmission for providing the received service.

11. Method for coverage enhancement in a cellular network according to claim 9 or 10, further comprising the step of:
- receiving a Session Start Request Message including the first identifier and the second identifier.

12. Method for coverage enhancement in a cellular network according to one of claims 9 to 11, wherein receiving the first identifier and receiving the at least one second identifier is performed by receiving the User Service Description and the at least one second identifier is included in the User Service Description by an extension of the XML structure.

13. Method for coverage enhancement in a cellular network according to one of claims 9 to 12, wherein the method is performed in a Multimedia Broadcast Multicast Service network and the first identifier is a primary Temporary Mobile Group Identifier and the at least one second identifier are secondary Temporary Mobile Group Identifiers.

14. Base Station in a cellular network, wherein the Base Station performs a method according to one of claims 1 to 8.

15. User Equipment in a cellular network, wherein the User Equipment performs a method according to one of claims 9 to 13.
